# EUROPÄISCHE PATENTSCHRIFT

(11) **EP 2 489 613 B1**
(45) Veröffentlichungstag und Bekanntmachung des Hinweises auf die Patenterteilung: **18.05.2016**
(21) Anmeldenummer: 12154655.0
(22) Anmeldetag: 09.02.2012
(51) Int. Cl.: B65G 43/10

(54) **Vorrichtung und Verfahren zum Transportieren von Behältnissen oder Behältnisgebinden mit drahtloser Zustandserfassung**
Device and method for transporting containers or container assemblies with wireless status detection
Dispositif et procédé de transport de récipients ou de groupes de récipients à l'aide d'une détection d'état sans fil

(30) Priorität: 17.02.2011 DE 102011011625
(43) Veröffentlichungstag der Anmeldung: 22.08.2012
(73) Patentinhaber: Krones AG, 93073 Neutraubling (DE)
(72) Erfinder: Ziegler, Manfred, 94034 Passau (DE); Seger, Martin, 92318 Neumarkt in der Oberpfalz (DE)
(74) Vertreter: Bittner, Bernhard

(56) Entgegenhaltungen:
- EP-A1- 2 042 449
- WO-A1-02/090218
- WO-A1-2009/047282
- WO-A2-2006/102691
- DE-A1- 10 060 581
- DE-A1- 10 060 582
- DE-A1-102004 038 135
- DE-A1-102007 025 553
- US-A1- 2009 135 019

## Beschreibung

Die vorliegende Erfindung bezieht sich auf eine Vorrichtung und ein Verfahren zum Transportieren von Behältnissen oder Behältnisgebinden. Derartige Vorrichtungen und Verfahren sind aus dem Stand der Technik seit langem bekannt. Dabei ist es insbesondere bekannt, dass die Behältnisse oder Behältnisgebinde entlang mehrerer Transportabschnitte von unterschiedlichen aufeinanderfolgenden Transporteinheiten transportiert werden. Diese einzelnen Transporteinheiten weisen dabei jeweils Antriebe wie beispielsweise Elektromotoren auf, um die Behältnisse oder Behältnisgebinde zu befördern. Weiterhin ist aus dem Stand der Technik bekannt, dass derartige Vorrichtungen Sensoreinrichtungen, wie beispielsweise Staumelder aufweisen, die Staus der Behältnisse oder Behältnisgebinde entlang der Transportstrecke erfassen, um in Reaktion auf diese Gegebenheiten die jeweiligen Antriebseinrichtungen zu steuern.

Aus der DE 10 2008 053 715 A1 ist ein Transportsystem für Packmittel bekannt. Dieses Transportsystem weist dabei ein elektrisches Messmodul mit einem Sensor zur Erfassung einer physikalischen Größe auf. Weiterhin ist dieses Messmodul an einem Transportelement vorgesehen und weist einen RFID-TAG oder RFID-Transponder in entsprechendem Aufbau auf. Daneben sind aus dem Stand der Technik Systeme bekannt, die eine Vielzahl von integrierten Sensoreinrichtungen aufweisen, die beispielsweise über BUS-Systeme mit den einzelnen Steuerungseinrichtungen verbunden sind. Dabei sind im Stand der Technik diese Sensoren in der Transportsteuerung konventionell oder mit so genannten BUS-Leitungen verdrahtet. Dieses Installationssystem ist noch mit hohen Kosten und gravierenden Reinigungsnachteilen verbunden. Weiterhin gestaltet sich die elektromagnetische Verträglichkeit (EMV) als nachteilig. Dies kann nur durch geeignete Abschirmungsmaßnahmen oder bauseitige Trennung von Leistungskabeln erreicht werden. DE 100 60 581 A1 beschreibt eine gattungsgemäße Vorrichtung.

Der vorliegenden Erfindung liegt daher die Aufgabe zugrunde, eine Vorrichtung und ein Verfahren zur Verfügung zu stellen, welche gegenüber dem Stand der Technik eine Kostenreduzierung ermöglichen. Dies wird erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche:

Die erfindungsgemäße Vorrichtung zum Transportieren von Behältnissen oder Behältnisgebinden enthält alle Merkmale des Anspruchs 1, und weist eine erste Transporteinheit auf, mit der die Behältnisse oder Behältnisgebinde entlang eines ersten vorgegebenen Transportabschnitts transportiert werden, wobei diese erste Transporteinheit wenigstens eine Antriebseinrichtung (beispielsweise in Form eines Elektromotors) zum Bewegen der Behältnisse oder Behältnisgebinde aufweist.

Weiterhin weist die Vorrichtung eine zweite Transporteinheit auf, welche in der Transportrichtung der Behältnisse oder Behältnisgebinde nach der ersten Transporteinheit angeordnet ist und welche die Behältnisse oder Behältnisgebinde entlang eines zweiten Transportabschnitts transportiert. Dabei weist diese zweite Transporteinheit wenigstens eine Antriebseinrichtung zum Bewegen der Behältnisse oder Behältnisgebinde auf.

Weiterhin weist die Vorrichtung eine erste Sensoreinrichtung auf, die wenigstens einen ersten Zustand der von der ersten Transporteinheit entlang des ersten Transportsabschnitts transportierten Behältnisse oder Behältnisgebinde erfasst sowie eine zweite Sensoreinrichtung, welche wenigstens einen zweiten Zustand der von der zweiten Transporteinheit entlang des zweiten Transportabschnitts transportierten Behältnisse oder Behältnisgebinde erfasst sowie wenigstens eine Steuerungseinrichtung, welche wenigstens eine Antriebseinrichtung unter Berücksichtigung wenigstens eines von einer der Sensoreinrichtungen erfassten Zustands steuert. Erfindungsgemäß weist wenigstens eine Sensoreinrichtung wenigstens eine Sendeeinrichtung auf, um ein für den Zustand charakteristisches Signal drahtlos (insbesondere an eine Empfangseinrichtung) auszugeben.

Bei dem Zustand kann es sich beispielsweise um einen Fehlerzustand des Transports handeln wie beispielsweise einen Stauzustand und/oder ein Verklemmen der Behältnisse, das heißt die Meldung, dass zu viele Behältnisse einen bestimmten Kontrollabschnitt passieren. Daneben kann es sich bei dem Zustand auch um einen anderen Fehlerzustand handeln, wie beispielsweise um ein fehlerhaftes Behältnis (beispielsweise ein beschädigtes Behältnis) oder auch ein liegend transportiertes Behältnis oder dergleichen. Auch wäre es möglich, dass es sich bei dem Fehlerzustand um das Vorhanden sein eines Behältnisses einer anderen Behältnisgattung handelt oder aber ein oder mehrere Behältnisse in falscher Orientierung transportiert werden.

Bei den Behältnissen handelt es sich insbesondere um Glasflaschen oder Kunststoffflaschen, es wäre jedoch, wie oben erwähnt auch möglich, dass anstelle der Behältnisse Behältnisgebinde, das heißt Gruppen aus mehreren Behältnissen, transportiert werden.

Vorteilhaft wird das erwähnte Signal zumindest indirekt an einen Antrieb bzw. die Antriebseinrichtung weitergeleitet, um in Reaktion auf dieses Signal eine Steuerung der jeweiligen Antriebseinrichtung zu bewirken. In Reaktion auf dieses Signal können geeignete Gegenmaßnahmen eingeleitet werden, beispielsweise ein Anhalten oder ein verlangsamter Betrieb der betreffenden Antriebseinrichtung oder die Ausgabe eines Alarmsignals an den Benutzer. Auch können ggfs. Ausschleusmechanismen aktiviert werden, welche bestimmte Behältnisse aus dem Prozess ausschleusen. Daneben können auch weitere Antriebseinrichtungen in Reaktion auf dieses Signal entsprechend angesteuert werden, insbesondere der betreffenden Antriebseinrichtung in der Transportrichtung der Behältnisse oder Behältnisgebinde vorausgehende (oder auch nachfolgende) Antriebseinrichtungen

Bei einer weiteren vorteilhaften Ausführungsform weist die Vorrichtung eine Anzeigeeinrichtung zur Ausgabe von Fehlern auf, beispielsweise einen Bildschirm, Touchscreen oder Monitor, der dem Benutzer anzeigt, ob und gegebenenfalls in welchen Bereichen Fehler aufgetreten sind. Vorteilhaft handelt es sich bei der Sensoreinrichtung um einen Stauschalter. Dabei ist es weiterhin möglich, ob es sich bei der Steuerungseinrichtung um eine zentrale Steuerungseinrichtung oder beispielsweise um eine SPS handelt, welche Signale einer Vielzahl von Sensoreinrichtungen aufnimmt und in Reaktion auf diese Signale die jeweiligen Antriebseinrichtungen steuert.

Bei einer weiteren vorteilhaften Ausführungsform weist die Transporteinrichtung bzw. deren Steuerung eine Speichereinrichtung auf, in der Adressen für die einzelnen Sensoreinrichtungen hinterlegt sind. Auf diese Weise wird sichergestellt, dass die einzelnen Signale, welche von den Sendeausrichtungen ausgegeben werden und von der Empfangseinrichtung aufgenommen werden, jeweils den zutreffenden Sensoreinrichtungen und damit auch den zutreffenden Positionen der jeweiligen Transportabschnitte zugeordnet werden. Vorteilhaft sind dabei die in dieser Speichereinrichtung hinterlegten Adressen einem Operanden zugeordnet und änderbar, um so einen Austausch der Sensoreinrichtungen zu erleichtern.

Bei einer vorteilhaften Ausführungsform weisen die erste und die zweite Sensoreinrichtung jeweils Sendeeinrichtungen auf, um für den Zustand charakteristische Signale drahtlos an die Empfangseinrichtung auszugeben.

Vorteilhaft ist dabei jeder Sensoreinrichtung, wie oben gesagt, eine diese Sensoreinrichtung eindeutig identifizierende Adresse zugeordnet.

Bei einer weiteren vorteilhaften Ausführungsform ist wenigstens eine Sensoreinrichtung drahtlos mit Energie zu deren Betrieb versorgbar. Daher kommen vorteilhaft die Sensoreinrichtungen ohne eigene Energieversorgung aus. Dabei ist es möglich, dass diese Versorgung mit Energie induktiv erfolgt. So kann beispielsweise ein Abfragesignal, welches den Zustand erfasst auch gleichzeitig die besagte Sensoreinrichtung mit Energie versorgen. Die Energie kann jedoch auch mittelbar durch eine Bewegung der Behältnisse oder der Transporteinrichtung zur Verfügung gestellt werden.

Erfindungsgemäß die Vorrichtung wenigstens eine Energieversorgungseinrichtung auf, welche wenigstens eine der Sensoreinrichtungen, bevorzugt eine Vielzahl von Sensoreinrichtungen, drahtlos mit Energie versorgt. Erfindungsgemäß handelt es sich bei dieser Energieversorgungseinrichtung auch um die Empfangseinrichtung, die auch zum Auslesen der Signale dient.

Bei einer weiteren vorteilhaften Ausführungsform weist wenigstens eine Transporteinheit ein Förderband zum Fördern der Behältnisse oder Behältnisgebinde auf. Damit werden vorteilhaft die Behältnisse über ihre Bodenflächen transportiert. Vorteilhaft werden dabei auch mehrere Behältnisse in einer schräg oder senkrecht zur Transport stehenden Richtung nebeneinander transportiert.

Erfindungsgemäß weist wenigstens eine Sensoreinrichtung einen so genannter SAW-Sensor (Surface acöustic wave) auf. Derartige SAW - basierte Vorrichtungen werden im Stand der Technik beispielsweise als Filter oder Oszillatoren eingesetzt. Vorteilhaft weist der Sensor ein piezoelektrisches Element auf, um elektrische Energie in mechanische Energie (in Form der Oberflächenwellen) umzusetzen. Durch diese Elemente können auch akustische Wellen in elektrische Signale umgesetzt werden

Um eine erhebliche Kostenreduzierung und auch eine spürbare Energieeinsparung zu erreichen, werden bevorzugt Sensoren mit SAW-basierender Technologie verwendet. Diese Sensoren bieten darüber hinaus den Vorteil einer eindeutigen Zuordnung, beispielsweise über eine Adresse und/oder Frequenz.

Vorteilhaft erfolgt eine Zustandsänderung beziehungsweise eine Informationsgewinnung durch einen Energieeintrag von außen. Durch derartige SAW- oder Oberflächen-Wellen (OFW-Bauelemente) können neuartige Identifikations- und Sensorelemente ermöglicht werden, die funkauslesbar und passiv sind. Diese Sensoren weisen Transponder auf, welche die Abfragesignale speichern, bis alle Umgebungsechos abgeklungen sind. Dann wird ein charakteristisches Antwortmuster des Transponders ausgegeben, beispielsweise an die Empfangseinrichtung ausgegeben. Dabei ist es denkbar, dass die jeweiligen Sensoren mit ihrem konstanten (und auch vorteilhaft für die jeweiligen Sensoren eindeutigem) Identifikationsmuster antworten.

Der Vorteil derartiger Sensoren besteht darin, dass diese rein passiv arbeiten. Bedeutend ist dabei der Abstand zwischen dem Abfragegerät und dem jeweiligen Sensor. Da die Halbleiterelektronik eine Mindestspannung benötigt, bestimmt der Abstand, ab dem nicht mehr genug Leistung aus dem HF-Feld der Abfrageeinheit entnommen werden kann, die maximale Reichweite des Systems. Auf diese Weise kann bereits über den Abstand zwischen einer Abfrageeinheit und der Sensoreinrichtung sichergestellt werden, dass von einer bestimmten Abfrageeinheit nur eine bestimmte Sensoreinrichtung oder eine bestimmte Gruppe von Sensoreinrichtungen abgefragt werden kann. Vorteilhaft weist die Vorrichtung mehrere Abfrageeinrichtungen auf, wobei jedoch auch alle diese Abfrageeinrichtungen mit derselben Steuereinrichtung kommunizieren können.

Diese Sensoreinrichtungen können dabei über eine Transponderantenne das jeweilige Signal aufnehmen.

Weil sich bei den Sensoreinrichtungen um SAW - Sensoren handelt, tritt das Problem auf, dass es aufgrund gesetzlicher Grundlagen nicht beliebig möglich ist, das Frequenzband um die definierte Trägerfrequenz beliebig zu nutzen. Dies bedeutet eine Reduzierung der möglichen Adressen auf ca. 64. Um dieses Problem zu lösen, ist es möglich, eine oder mehrere Sendestationen in einer zeitlichen Reihenfolge zu aktivieren und jeweils nur die Tags bzw. Sensoreinrichtungen im jeweiligen Empfangsbereich abzutasten. Auf diese Weise kann das Auslesen der Sensoreinrichtungen in der Art eines Multiplexverfahrens erfolgen.

Bei einer weiteren vorteilhaften Ausführungsform weist wenigstens eine Sensoreinrichtung ein Hall-Element auf. Derartige Hall-Elemente beziehungsweise Hall-Sensoren nutzen den Hall-Effekt zur Messung von Magnetfeldern und elektrischen Strömen oder auch zur Lageerfassung. Wird eine derartige Sensoreinrichtung von einem Strom durchflossen und dabei in ein senkrecht zu diesem Strom verlaufendes Magnetfeld gebracht, liefert dieses Element eine Ausgangsspannung, die proportional zu dem Produkt aus dem Strom und der magnetischen Feldstärke ist. Auf diese Weise ist es möglich, derartige Hall-Sensoren als berührungs- und kontaktlose Signalgeber einzusetzen.

Es wäre beispielsweise möglich, dass die Transporteinheiten bewegliche Elemente, beispielsweise Stauwippen, aufweisen, welche wiederum mit Permanentmagneten ausgestattet sind. Diese Permanentmagnete können wiederum zum Energieübertrag an die Hall-Sensoren verwendet werden und dabei gleichzeitig diese Pendelbewegung als Information (insbesondere darüber, ob der Stauschalter belegt ist) an eine übergeordnete Steuerungseinrichtung übertragen.

Die Permanentmagnete können jedoch auch an beweglichen Teilen der Transporteinrichtung, beispielsweise an Transportbändern oder Umlenkrollen angeordnet sein, so dass vorteilhaft im Arbeitsbetrieb durch die Bewegung der Transporteinrichtung und damit die Bewegungen dieser Permanentmagnete die nötige Energie erzeugt werden kann. Die Sensoreinrichtung selbst sind vorteilhaft stationär angeordnet.

Daneben wäre es auch möglich, dass es sich bei den Sensoreinrichtungen um SAW - Sensoren handelt, welche zusätzlich auch den Hall - Effekt (insb. zur Messwerterfassung) nutzen, dass also kombinierte SAW - Hall - Sensoren verwendet werden.

Bei einer weiteren vorteilhaften Ausführungsform sind in der Empfangseinrichtung die einzelnen Adressen der jeweiligen Sensoreinrichtungen gespeichert, wobei diese gespeicherten Adressen bevorzugt auch änderbar sind, was beispielsweise im Fall des Austausches einer Sensoreinrichtung vorteilhaft ist. So ist es möglich, dass bei Austausch einer Sensoreinrichtung auch die Empfangseinrichtung automatisch auf die neue Sensoreinrichtung beziehungsweise auf die mit dieser ausgestrahlten neuen Adresse einstellbar ist.

Zu diesem Zweck ist es möglich, dass die Empfangseinrichtung über eine Lernfunktion verfügt, welche eine jeweilige neue Adresse einliest. Dabei ist es denkbar, dass die Empfangseinrichtung eine Schalteinrichtung aufweist, mit der auf Wunsch von einem Arbeitsmodus in einen Lernmodus geschaltet werden kann, um neue Sensoreinrichtungen einzulesen. Auch ist es denkbar, dass die Funktion derart konzipiert ist, dass bei mehrfacher Übermittlung einer neuen Adresse diese neue Adresse in ein Speichersystem übernommen wird. Gleichzeitig kann geprüft werden, ob andere Adressen nicht mehr gesendet werden, beispielsweise die Adressen einer nicht mehr vorhandenen Sensoreinrichtung. In diesem Fall kann die ersetzte Sensoreinrichtung die Funktion der bisherigen Sensoreinrichtung übernehmen.

Ein weiterer Vorteil dieser Vorrichtung besteht darin, dass eine ortsunabhängige Montage möglich ist und auch Sensoreinrichtungen an frei vorsehbaren Positionen untergebracht werden können.

Vorteilhaft weist die Vorrichtung eine Fülleinrichtung zum Befüllen der Behältnisse mit einem fließfähigen Medium, bevorzugt einer Flüssigkeit und insbesondere einem Getränk auf, wobei diese Fülleinrichtung besonders vorteilhaft den oben erwähnten Transporteinheiten in der Transportrichtung der Behältnisse oder Behältnisgebinde vorangestellt ist. Die Fülleinrichtung kann den Transporteinrichtungen jedoch auch in der Transportrichtung der Behältnisse oder Behältnisgebinde nachgestellt sein.

Vorteilhaft dienen die Transporteinheiten zum Transportieren befüllter Gebinde. Bei einer weiteren vorteilhaften Ausführungsform sind die erwähnten Transporteinheiten unmittelbar hintereinander angeordnet.

Die vorliegende Erfindung ist weiterhin auf ein Verfahren zum Transportieren von Behältnissen oder Behältnisgebinden ertsprechend des Anspruchs 6 gerichtet, wobei die Behältnisse oder Behältnisgebinde mit einer ersten Transporteinheit entlang eines vorgegebenen ersten Transportabschnitts transportiert werden und diese erste Transporteinheit wenigstens eine Antriebseinrichtung zum Bewegen der Behältnisse oder Behältnisgebinde aufweist und wobei die Behältnisse oder Behältnisgebinde mit einer zweiten Transporteinheit, welche in der Transportrichtung der Behältnisse oder Behältnisgebinde nach der ersten Transporteinheit angeordnet ist, entlang eines zweiten Transportabschnitts transportiert werden und wobei diese zweite Transporteinheit wenigstens eine Antriebseinrichtung zum Bewegen der Behältnisse oder Behältnisgebinde aufweist.

Weiterhin erfasst wenigstens eine erste Sensoreinrichtung wenigstens einen Zustand der von der ersten Transporteinheit entlang des ersten Transportsabschnitts transportierten Behältnisse oder Behältnisgebinde. Eine zweite Sensoreinrichtung erfasst wenigstens einen zweiten Zustand der von der zweiten Transporteinheit entlang des zweiten Transportabschnitts transportierten Behältnisse oder Behältnisgebinde und wenigstens eine Steuerungseinrichtung steuert wenigstens eine Antriebseinrichtung unter Berücksichtigung wenigstens eines von wenigstens einer der Sensoreinrichtungen erfaßten Zustands.

Erfindungsgemäß gibt wenigstens eine Sensoreinrichtung mittels einer Sendeeinrichtung ein für den Zustand charakteristisches Signal und/oder eine eindeutige Adresse drahtlos an eine Empfangseinrichtung und/oder eine Anzeigeeinrichtung aus.

Es wird daher auch verfahrensseitig vorgeschlagen, die jeweiligen Messsignale drahtlos in eine Empfangseinrichtung auszugeben. Vorteilhaft wird die Sendeeinrichtung drahtlos aktiviert beziehungsweise mit Energie versorgt, um das jeweilige Signal an die Empfangseinrichtung auszugeben. Diese Aktivierung kann dabei beispielsweise mittels Funkwellen und/oder induktiv erfolgen. Bevorzugt ist wenigstens eine Sensoreinrichtung und besonders bevorzugt sind die Sensoreinrichtungen in der Bewegungsrichtung der Behältnisse oder Behältnisgebinde wenigstens teilweise stromabwärts bezüglich der diesen Sensoreinrichtungen zugeordneten Antriebseinrichtungen (d.h. der Antriebseinrichtungen, welche auf Basis von von diesen Sensoreinrichtungen ausgegebenen Signalen gesteuert werden) angeordnet. Dies bedeutet, dass auf Basis eines von einer bestimmten Sensoreinrichtung ausgegebenen Signals bevorzugt eine Antriebseinrichtung gesteuert wird, welche in der Transportrichtung der Behältnisse oder Behältnisgebinde stromaufwärts zu dieser Antriebseinrichtung angeordnet ist.

Ein weiteres vorteilhaftes Verfahren beinhaltet die automatisierte Zuordnung der Adressen der Sensorik an die Operanden einer Steuerungseinrichtung, falls für Instandhaltung oder Reparaturzwecken ein Sensor ersetzt werden muss. Ebenso kann dadurch bei der Erstinbetriebnahme eine Zuordnung zur Steuerung erfolgen. Dazu wird bevorzugt an der Anzeigeeinrichtung ein Operand aus einer zuvor erstellten Auswahlliste selektiert und vorteilhaft mittels einer Empfangseinrichtung an der Anzeigeeinrichtung wird die Adresse dem ausgewählten Operanden in der Steuerung zugeordnet. Um eine eindeutige Zuordnung gewährleisten zu können, wird bevorzugt parallel zum Operanden die aktuell gelesene Adresse angezeigt und durch Bestätigung die Zuordnung abgespeichert.

Weitere Vorteile und Ausführungsformen ergeben sich aus den beigefügten Zeichnungen:
Diese zeigen:
   - Fig. 1: eine schematische Darstellung einer erfindungsgemäßen Vorrichtung;
   - Fig. 2: eine schematische Darstellung zur Veranschaulichung der vorliegenden Erfindung; und
   - Fig. 3: eine schematische Darstellung einer Sensoreinrichtung.

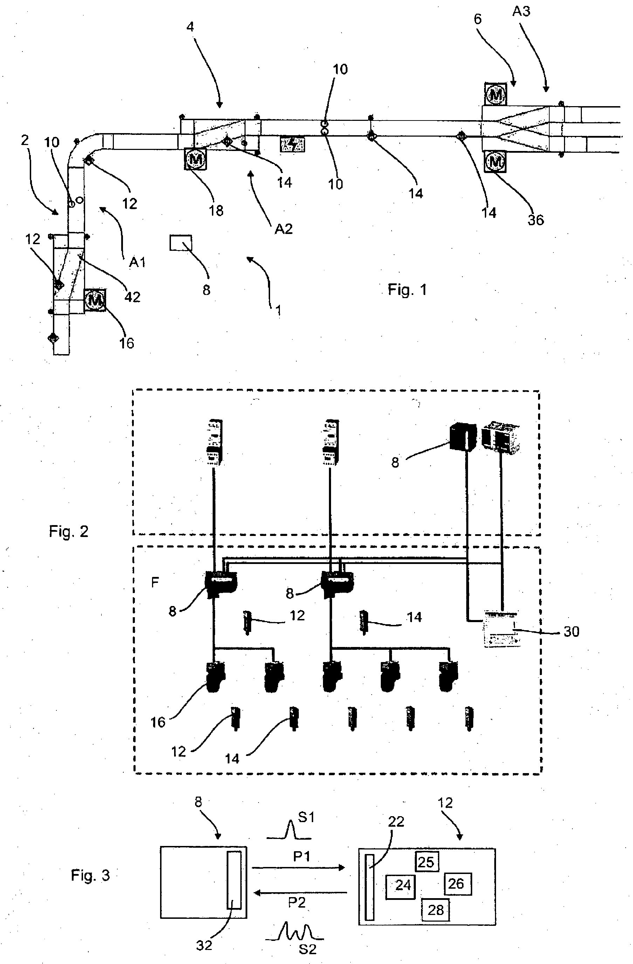

Fig. 1 zeigt eine schematische Darstellung einer erfindungsgemäßen Vorrichtung 1 zum Transportieren von Behältnissen 10.

Diese Vorrichtung weist dabei eine erste Transporteinheit 2 auf, welche die Behältnisse 10 entlang eines ersten Transportsabschnitts A1 befördert. Dabei weist diese erste Transport-einheit 2 eine Antriebseinrichtung 16 auf, welche zum Bewegen der Behältnisse 10 dient, beispielsweise zum Antreiben eines Transportbandes. An diese erste Transporteinheit 2 schließt sich eine zweite Transporteinheit 4 an, welche die Behältnisse entlang eines zweiten vorgegebenen Transportabschnitts A2 transportiert. Auch diese zweite Transporteinheit 4 weist dabei wiederum eine Antriebseinrichtung 18 auf. An die zweite Transporteinheit 4 schließt sich eine dritte Transporteinheit 6 an, welche die Behältnisse oder Behältnisgebinde entlang des Transportabschnitts A3 transportiert. Auch diese dritte Transporteinheit 6 weist dabei wiederum eine Antriebseinrichtung 36 auf.

Die Bezugszeichen 12 und 14 beziehen sich jeweils auf Sensoreinrichtungen, welche einen für einen Zustand der Behältnisse charakteristisches Signal aufnehmen, beispielsweise einen Stauzustand der einzelnen Behältnisse. Diese Sensoreinrichtungen weisen dabei zusätzlich jeweils Sendeeinrichtungen (in Fig. 2 nicht gezeigt) auf, welche das jeweilige Signal hier an eine Steuerungseinrichtung 8 übermitteln. Die Steuerungseinrichtung 8 steuert wiederum die einzelnen Antriebseinrichtungen 16, 18, 36 in Abhängigkeit von den von den Sensoreinrichtungen 12 und 14 erfassten Daten.

Fig. 2 zeigt eine weitere Darstellung zur Veranschaulichung der vorliegenden Erfindung. Hier sind wieder die einzelnen Antriebseinrichtungen 16 und 18 dargestellt sowie auch die diesen zugeordneten Sensoreinrichtungen 12 und 14 wobei jedoch, anders als in Fig. 2 dargestellt, auch mehrere dieser Sensoreinrichtungen 12, 14 vorgesehen sein können. Das Bezugszeichen 30 kennzeichnet eine Anzeigeeinrichtung, die beispielsweise Zustände des Transports, z.B. Stauzustände anzeigen kann. Auch können über diese Anzeigeeinrichtung Alarmsignale an den Benutzer ausgegeben werden.

Bei der in Fig. 2 gezeigten Darstellung können auf der Feldebene F jeweils die Sensoreinrichtungen, die Antriebseinrichtungen und die jeweiligen Mastersteuerungen auch als Einheiten ausgebildet sein. Auf diese Weise kann die notwendige Anzahl von Schaltschränken reduziert werden. Optional wäre auch eine Verkabelung der Sensoren 16, 18 über Gateways oder über dezentrale Frequenzumformer (Movigear, FCD 300 oder ähnliche) möglich. Bei der hier gezeigten Steuerungseinrichtung 8 kann es sich beispielsweise um SNI-MasterEinrichtungen (SNI = single network installation) und/oder speicherprogrammierbare Steuerungen handeln. Weiterhin wäre es auch denkbar, dass direkt an den Transporteinheiten 2, 4, 6 (vgl. Fig. 1) Temperaturschalter angebaut sein können. Auch ist es möglich, dass die einzelnen Antriebseinrichtungen 16, 18 und 36 zusätzlich manuell gesteuert werden.

Fig. 3 zeigt eine weitere Darstellung zur Veranschaulichung der Messwerterfassung. Hier bezieht sich das Bezugszeichen 12 wiederum auf die Sensoreinrichtung, welche hier eine Sende- und Empfangseinrichtung in Form einer Antenne 22 aufweist. Daneben weist diese Sensoreinrichtung eine Speichereinrichtung 24 auf, in der beispielsweise die Adresse der Sensoreinrichtung 12 gespeichert werden kann. Daneben ist ein Sensorelement 26 vorgesehen, welches zur Erfassung des Zustands beziehungsweise der Zustände dient. Daneben kann auch eine Prozessoreinrichtung 28 vorgesehen sein, welche die erfassten Daten auswertet. Durch die Steuerungseinrichtung 8 kann über eine Sendeeinrichtung 32 ein Abfragesignal S1 (vgl. Pfeil P1) an die Sensoreinrichtung 12 übermittelt werden.

Dieses Abfragesignal S1 dient gleichzeitig auch zur Energieversorgung der Sensoreinrichtung 12 beziehungsweise des Sensorelements 26. In Beantwortung dieses Signals S1 kann die Sensoreinrichtung (vgl. Pfeil P2) ein Antwortsignal S2 ausgeben, welches sowohl für die Adresse der Sensoreinrichtung 12 charakteristisch ist, als auch für den jeweils erfassten Messwert. Die Sendeeinrichtung 32 kann dabei auch als Empfangseinrichtung zum Empfangen dieses Signals ausgestattet sein. Daneben wäre es auch möglich, dass die Vorrichtung eine separate Empfangseinrichtung zum Empfangen des Signals S2 aufweist. Anstelle des Signals S1, welches hier auch die Energieversorgung gewährleistet, wäre es jedoch auch möglich, die Energieversorgung in anderer Art und Weise sicher zu stellen, etwa durch die oben erwähnte Stauwippe, welche durch ein induktives Element hier für die Messung nötige Energie erzeugt. Daneben könnte die Sensoreinrichtung auch selbst ein Speichermittel wie zum Beispiel eine Batterie aufweisen.

Bei einer bevorzugten Ausführungsform weist die Sensoreinrichtung 12 Energiewandlungselemente, beispielsweise einen Hall - Sensor 25 auf, der insbesondere eine Folge der Bewegung der Behältnisse nutzt (beispielsweise über eine aus dem Stand der Technik bekannte Stauwippe, um Energie zur Versorgung der Sensoreinrichtung 12 zu erzeugen. So wäre es im einfachsten Fall auch möglich, dass eine Bewegung der entsprechenden Stauwippe direkt genutzt wird, um ein Signal S2 auszugeben, wodurch die Empfangseinrichtung 32 das Auftreten eines Fehlerzustandes erfassen kann.

Die Steuerungseinrichtung 8 kann wiederum, wie in Fig. 1 gezeigt sämtliche Antriebseinrichtungen 16, 18 und 36 steuern, es wäre jedoch auch möglich, dass jeder Antriebseinrichtung eine separate Steuerungseinrichtung und auch separate Sensoreinrichtungen zugeordnet sind.

### Bezugszeichenliste

- 1: Vorrichtung
- 2: erste Transporteinheit
- 4: zweite Transporteinheit
- 6: dritte Transporteinheit
- 8: Steuerungseinrichtung
- 10: Behältnisse
- 12: Sensoreinrichtungen
- 14: Sensoreinrichtungen
- 16: erste Antriebseinrichtung
- 18: zweite Antriebseinrichtung
- 22: Antenne, Sendeeinrichtung
- 24: Speichereinrichtung
- 25: Hall - Sensor
- 26: Sensorelement
- 28: Prozessoreinrichtung
- 30: Anzeigeeinrichtung
- 32: Sendeeinrichtung
- 36: dritte Antriebseinrichtung
- A1: erster Transportabschnitt
- A2: zweiter Transportabschnitt
- A3: dritter Transportabschnitt
- S1: Abfragesignal
- S2: Antwortsignal
- P1, P2: Pfeil
- F: Feldebene

## Patentansprüche

1. Vorrichtung (1) zum Transportieren von Behältnissen oder Behältnisgebinden (10) mit einer ersten Transporteinheit (2), welche die Behältnisse oder Behältnisgebinde (10) entlang eines ersten vorgegebenen Transportabschnitts (A1) transportiert, wobei diese erste Transporteinheit (2) wenigstens eine Antriebseinrichtung (16) zum Bewegen der Behältnisse oder Behältnisgebinde (10) aufweist, mit einer zweiten Transporteinheit (4), welche in der Transportrichtung der Behältnisse oder Behältnisgebinde (10) nach der ersten Transporteinheit (2) angeordnet ist und welche die Behältnisse oder Behältnisgebinde (10) entlang eines zweiten Transportabschnitts (A2) transportiert, wobei diese zweite Transporteinheit (4) wenigstens eine Antriebseinrichtung (18) zum Bewegen der Behältnisse oder Behältnisgebinde (10) aufweist, mit einer ersten Sensoreinrichtung (12), welche wenigstens einen ersten Zustand der von der ersten Transporteinheit (2) entlang des ersten Transportabschnitts (A1) transportierten Behältnisse oder Behältnisgebinde (10) erfasst, mit einer zweiten Sensoreinrichtung (14), welche wenigstens einen zweiten Zustand der von der zweiten Transporteinheit (4) entlang des zweiten Transportabschnitts (A1) transportierten Behältnisse oder Behältnisgebinde (10) erfasst und mit wenigstens einer Steuerungseinrichtung (8), welche wenigstens eine Antriebseinrichtung (16, 18) unter Berücksichtigung wenigstens eines von wenigstens einer der Sensoreinrichtungen (12, 14) erfassten Zustandes steuert
**dadurch gekennzeichnet, dass**
wenigstens eine Sensoreinrichtung (12, 14) eine Sendeeinrichtung (22) aufweist, um ein für den Zustand charakteristisches Signal drahtlos an eine Empfangseinrichtung auszugeben, wobei wenigstens eine Sensoreinrichtung (12, 14) einen SAW - Sensor aufweist, wobei die Vorrichtung (1) wenigstens eine Energieversorgungseinrichtung aufweist, so dass wenigstens eine der Sensoreinrichtungen (12, 14), bevorzugt eine Vielzahl von Sensoreinrichtungen (12, 14) drahtlos mit Energie versorgbar sind und wobei es sich bei der Energieversorgungseinrichtung auch um die Empfangseinrichtung handelt, durch welche die Signale auslesbar sind.

2. Vorrichtung nach Anspruch 1, **dadurch gekennzeichnet, dass**
die erste und die zweite Sensoreinrichtung (12, 14) jeweils Sendeeinrichtungen (22) aufweisen, um für den Zustand charakteristische Signale drahtlos an die Empfangseinrichtung auszugeben.

3. Vorrichtung (1) nach wenigstens einem der vorangegangenen Ansprüche,
**dadurch gekennzeichnet, dass**
jeder Sensoreinrichtung (12, 14) eine diese eindeutig identifizierende Adresse zugeordnet ist.

4. Vorrichtung (1) nach wenigstens einem der vorangegangenen Ansprüche,
**dadurch gekennzeichnet, dass**
wenigstens eine Transporteinheit (2, 4) ein Förderband zum Fördern der Behältnisse oder Behältnisgebinde (10) aufweist.

5. Vorrichtung (1) nach wenigstens einem der vorangegangenen Ansprüche,
**dadurch gekennzeichnet, dass**
wenigstens eine Sensoreinrichtung (12, 14) ein Hall-Element (25) aufweist.

6. Verfahren zum Transportieren von Behältnissen oder Behältnisgebinden (10) wobei die Behältnisse oder Behältnisgebinde (10) mit einer ersten Transporteinheit (2), entlang eines ersten vorgegebenen Transportabschnitts (A1) transportiert werden und diese erste Transporteinheit (2) wenigstens eine Antriebseinrichtung (16) zum Bewegen der Behältnisse oder Behältnisgebinde (10) aufweist, und wobei die Behältnisse oder Behältnisgebinde mit einer zweiten Transporteinheit (4), welche in der Transportrichtung der Behältnisse oder Behältnisgebinde (10) nach der ersten Transporteinheit (2) angeordnet ist, entlang eines zweiten Transportabschnitts (A2) transportiert werden und diese zweite Transporteinheit (4) wenigstens eine Antriebseinrichtung (18) zum Bewegen der Behältnisse oder Behältnisgebinde (10) aufweist, und wobei eine erste Sensoreinrichtung (12), wenigstens einen ersten Zustand der von der ersten Transporteinheit (2) entlang des ersten Transportabschnitts (A1) transportierten Behältnisse oder Behältnisgebinde (10) erfasst und eine zweite Sensoreinrichtung (14); wenigstens einen zweiten Zustand der von der zweiten Transporteinheit (4) entlang des zweiten Transportabschnitts (A2) transportierten Behältnisse oder Behältnisgebinde (10) erfasst und wenigstens eine Steuerungseinrichtung (8) wenigstens eine Antriebseinrichtung (16, 18) unter Berücksichtigung wenigstens eines von wenigstens einer der Sensoreinrichtungen (12, 14) erfassten Zustandes steuert
**dadurch gekennzeichnet, dass**
wenigstens eine Sensoreinrichtung (12, 14) mittels einer Sendeeinrichtung (22) ein für den Zustand charakteristisches Signal (S2) und/oder eine eindeutige Adresse drahtlos an eine Empfangseinrichtung (8) oder eine Anzeigeeinrichtung (30) ausgibt, wobei wenigstens eine Sensoreinrichtung (12, 14) einen SAW - Sensor aufweist, wobei wenigstens eine Energieversorgungseinrichtung vorgesehen ist, welche wenigstens eine der Sensoreinrichtungen (12, 14), bevorzugt eine Vielzahl von Sensoreinrichtungen (12, 14), drahtlos mit Energie versorgt und wobei es sich bei der Energieversorgungseinrichtung auch um die Empfangseinrichtung handelt, weiche zum Auslesen der Signale dient.

7. Verfahren nach Anspruch 6,
**dadurch gekennzeichnet, dass**
durch eine Vorauswahl an der Anzeigeeinrichtung (30) die Adresse einem Operanden in der Steuerung zugeordnet wird.

8. Verfahren nach Anspruch 7,
**dadurch gekennzeichnet, dass** die Adresse durch Bestätigung abgespeichert wird.

## Claims

1. An apparatus (1) for transporting containers or container packs (10), comprising a first transport unit (2) that transports the containers or container packs (10) along a first predefined transport section (A1), wherein this first transport unit (2) includes at least one drive unit (16) for moving the containers or container packs (10), comprising a second transport unit (4) which is arranged downstream of the first transport unit (2) in the transport direction of the containers or container packs (10) and which transports the containers or container packs (10) along a second transport section (A2), wherein this second transport unit (4) includes at least one drive unit (18) for moving the containers or container packs (10), comprising a first sensor unit (12) that detects at least one first condition of the containers or container packs (10) transported by the first transport unit (2) along the first transport section (A1), comprising a second sensor unit (14) which detects at least one second condition of the containers or container packs (10) transported by the second transport unit (4) along the second transport section (A1), and comprising at least one control unit (8) that controls at least one drive unit (16, 18) taking into account at least one condition detected by at least one of the sensor units (12, 14),
**characterised in that** at least one sensor unit (12, 14) includes a transmission unit (22) in order to emit a signal characteristic of the condition to a receiving unit in a wireless manner, wherein at least one sensor device (12, 14) includes a SAW sensor, wherein the apparatus (1) includes at least one energy supply device so that energy can be supplied to at least one of the sensor devices (12, 14), preferably a plurality of sensor devices (12, 14) in a wireless manner and wherein the energy supply device is also the receiving device, by means of which the signals can be read.

2. The apparatus as claimed in claim 1, **characterised in that** the first and second sensor units (12, 14) respectively include transmission units (22) in order to emit signals characteristic of the condition to the receiving unit in a wireless manner.

3. The apparatus (1) as claimed in at least one of the preceding claims, **characterised in that** each sensor unit (12, 14) is associated with an address that uniquely identifies the sensor unit (12, 14).

4. The apparatus (1) as claimed in at least one of the preceding claims, **characterised in that** at least one transport unit (2, 4) includes a conveyor belt for conveying the containers or container packs (10).

5. The apparatus (1) as claimed in at least one of the preceding claims, **characterised in that** at least one sensor unit (12, 14) includes a Hall element (25).

6. A method for transporting containers or container packs (10), wherein the containers or container packs (10) are transported by a first transport unit (2) along a first predefined transport section (A1) and this first transport unit (2) includes at least one drive unit (16) for moving the containers or container packs (10), and wherein the containers or container packs are transported by a second transport unit (4) which is arranged downstream of the first transport unit (2) in the transport direction of the containers or container packs (10) along a second transport section (A2), and this second transport unit (4) includes at least one drive unit (18) for moving the containers or container packs (10), and wherein a first sensor unit (12) detects at least one first condition of the containers or container packs (10) transported by the first transport unit (2) along the first transport section (A1) and a second sensor unit (14) detects at least one second condition of the containers or container packs (10) transported by the second transport unit (4) along the second transport section (A2), and at least one control unit (8) controls at least one drive unit (16, 18) taking into account at least one condition detected by at least one of the sensor units (12, 14),
**characterised in that** at least one sensor unit (12, 14) emits, by means of a transmission unit (22), a signal (S2) that is characteristic of the condition and/or a unique address to a receiving unit (8) or a display unit (30) in a wireless manner, wherein at least one sensor device (12, 14) includes a SAW sensor, at least one energy supply device being provided which supplies energy to at least one of the sensor devices (12, 14), preferably a plurality of sensor devices (12, 14) in a wireless manner and wherein the energy supply device is also the receiving device which serves for reading the signals.

7. The method as claimed in claim 6, **characterised in that** by way of a preselection on the display unit (30), the address is associated with an operand in the controller.

8. The method as claimed in claim 7, **characterised in that** the address is stored by confirmation.

## Revendications

1. Dispositif (1) de transport de récipients ou de gerbes de récipients (10) comprenant une première unité de transport (2), laquelle transporte les récipients ou les gerbes de récipients (10) le long d'une première section de transport (A1) prédéfinie, cette première unité de transport (2) comprenant au moins un dispositif d'entraînement (16) permettant de déplacer les récipients ou les gerbes de récipients (10) avec une deuxième unité de transport (4), laquelle est disposée dans le sens de transport des récipients ou des gerbes de récipients (10) en aval de la première unité de transport (2) et laquelle transporte les récipients ou les gerbes de récipient (10) le long d'une deuxième section de transport (A2), cette deuxième unité de transport (4) comprenant au moins un dispositif d'entraînement (18) permettant de déplacer les récipients ou les gerbes de récipients (10), avec un premier dispositif de détection (12) lequel détecte au moins un premier état des récipients ou des gerbes de récipients (10) transportés par la première unité de transport (2) le long de la première section de transport (A1), avec un deuxième dispositif de détection (14) lequel détecte au moins un deuxième état des récipients ou des gerbes de récipients (10) transportés par la deuxième unité de transport (4) le long de la deuxième section de transport (A1), et comprenant au moins un dispositif de commande (8) lequel commande au moins un dispositif d'entraînement (16, 18) avec prise en compte d'au moins un état détecté par au moins un des dispositifs de détection (12, 14),
**caractérisé en ce qu'**
au moins un dispositif de détection (12, 14) comprend un dispositif d'émission (22), afin de délivrer une caractéristique de l'état du signal sans fil à un dispositif de réception, au moins un dispositif de détection (12, 14) comprenant un capteur d'ondes acoustiques de surface, le dispositif (1) comprenant au moins un dispositif d'alimentation en énergie de sorte qu'au moins un des dispositifs de détection (12, 14), de préférence une pluralité de dispositifs de détection (12, 14), peuvent être alimentés en énergie sans fil, et le dispositif d'alimentation en énergie étant également le dispositif de réception par l'intermédiaire duquel les signaux peuvent être lus.

2. Dispositif selon la revendication 1, **caractérisé en ce que**
le premier et le deuxième dispositif de détection (12, 14) comprennent chacun des dispositifs d'émission (22), afin de délivrer au dispositif de réception des signaux caractéristiques de l'état sans fil.

3. Dispositif (1) selon au moins l'une des revendications précédentes,
**caractérisé en ce qu'**
à chaque dispositif de détection (12, 14) une adresse unique est attribuée.

4. Dispositif (1) selon au moins l'une des revendications précédentes,
**caractérisé en ce qu'**
au moins une unité de transport (2, 4) comprend une bande transporteuse servant à transporter les récipients ou les gerbes de récipients (10).

5. Dispositif (1) selon au moins l'une des revendications précédentes,
**caractérisé en ce qu'**
au moins un dispositif de détection (12, 14) comprend un élément à effet Hall (25).

6. Procédé de transport de récipients ou de gerbes de récipients (10), les récipients ou les gerbes de récipients (10) étant transportés au moyen d'une première unité de transport (2) le long d'une première section de transport (A1) prédéfinie, et cette première unité de transport (2) comprenant au moins un dispositif d'entraînement (16) permettant de déplacer les récipients ou les gerbes de récipients (10), et les récipients ou les gerbes de récipients étant transportés au moyen d'une deuxième unité de transport (4), laquelle est disposée dans le sens de transport des récipients ou des gerbes de récipients (10) en aval de la première unité de transport (2), le long d'une deuxième section de transport (A2), et cette deuxième unité de transport (4) comprenant au moins un dispositif d'entraînement (18) permettant de déplacer les récipients ou les gerbes de récipients (10), et un premier dispositif de détection (12) détectant au moins un premier état des récipients ou des gerbes de récipients (10) transportés par la première unité de transport (2) le long de la première section de transport (A1) et un deuxième dispositif de détection (14) détectant au moins un deuxième état des récipients ou des gerbes de récipients (10) transportés par la deuxième unité de transport (4) le long de la deuxième section de transport (A2), et au moins un dispositif de commande (8) commandant au moins un dispositif d'entraînement (16, 18) avec prise en compte d'au moins un état détecté par au moins un des dispositifs de détection (12,14),
**caractérisé en ce qu'**
au moins un dispositif de détection (12, 14) délivre à un dispositif de réception (8) ou à une sortie d'un dispositif d'affichage (30), au moyen d'un dispositif d'émission (22), une caractéristique de l'état d'un signal (S2) et/ou une adresse unique sans fil, au moins un dispositif de détection (12, 14) comprenant un capteur d'ondes acoustiques de surface, au moins un dispositif d'alimentation en énergie étant prévu lequel alimente sans fil en énergie au moins un des dispositifs de détection (12, 14), de préférence une pluralité de dispositifs de détection (12, 14), et le dispositif d'alimentation en énergie étant également le dispositif de réception lequel sert à lire les signaux.

7. Procédé selon la revendication 6,
**caractérisé en ce que**
l'adresse est attribuée à un opérande dans la commande au moyen d'une présélection effectuée sur le dispositif d'affichage (30).

8. Procédé selon la revendication 7,
**caractérisé en ce que** l'adresse est mise en mémoire au moyen d'une confirmation.
